# EUROPEAN PATENT APPLICATION

(11) **EP 1 986 047 A2**
(43) Date of publication of application: **29.10.2008**
(21) Application number: 08151270.9
(22) Date of filing: 11.02.2008
(51) Int. Cl.: G03B 17/18, G03B 17/20, H04N 5/232

(54) **Photographing apparatus enabling easy changing of setup information and method of controlling the same**

(30) Priority: 25.04.2007 KR 20070040349
(71) Applicant: Samsung Electronics Co., Ltd., Suwon-si, Gyeonggi-Do (KR)
(72) Inventor: Park, Bo-eun, Bundang-dong Bundang-gu Seongnam-si Gyeonggi-do (KR); Park, Wan-je, Gangnam-gu Seoul (KR); Seung, Jung-ah, Maetan 3-dong Yeongtong-gu Suwon-si Gyeonggi-do (KR); Jang, In-ra, Gwangmyeong-si Gyeonggi-do (KR)
(74) Representative: Grünecker, Kinkeldey, Stockmair & Schwanhäusser Anwaltssozietät

(57) **Abstract**

A photographing apparatus to easily change setup information and a method of controlling the same. The photographing apparatus displays setup information applied to the photographed image as well as a photographed image on an LCD. As a result, a user can change setup information easily, and confirm quickly an image according to the changed set values.

## Description

### BACKGROUND OF THE INVENTION

### 1. Field of the Invention

The present general inventive concept relates to a photographing apparatus and a method of controlling the same. More particularly, the present general inventive concept relates to a photographing apparatus that easily changes setup information, and a method of controlling the same.

### 2. Description of the Related Art

An image apparatus such as a photographing apparatus records an image generated by photographing a subject. Examples of the photographing apparatus may include a digital camera or a digital camcorder. The photographing apparatus may play back an image that was photographed and recorded. The image may be displayed on a television (TV) screen or the like which may be connected to the photographing apparatus.

If a user desires to change set values of a photographing apparatus such as shutter speed, the user may select an item 'menu' of the photographing apparatus. The user may then select menu item 'shutter speed', and may then select a value of the shutter speed to change the shutter speed of the photographing apparatus. The user may then determine if the shutter speed is appropriate for recording the image based on the viewable image. If the viewable image is not satisfactory and the shutter speed does not meet the recording criteria, the user may then reiterate the above process to change the set value of the shutter speed, as explained above.

Although skilled users of photographic apparatuses will recognize problems that may be associated with a photographed image, and may be able to change the set values of the photographing apparatus in order to correct for these problems, it may be difficult for others less skilled to recognize these problems and know how to correct for these problems. Therefore, a need exists for a photographing apparatus whereby setup information and the method of changing set values of the photographed image or items may be less difficult to understand and implement.

### SUMMARY OF THE INVENTION

The present general inventive concept provides a photographing apparatus that may have set values easily changed by a user, and further to quickly confirm an image according to the changed set values.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a photographing apparatus including a display unit to display an image and setup information, an operation unit to receive a command of a user to change the setup information, and a display unit that may be divided into a first part to display the image and a second part to display the setup information, wherein the operation unit may be disposed in the second part of the display.

The operation unit may include a button that may be pressed by the user and a switching unit that may be switched by pressing the button to receive the command of the user, wherein the button may be disposed above the second part of the display.

If a shutter button of the photographing apparatus is pressed halfway or to a midpoint, the setup information may be displayed on the second part of the display.

The second part of the display may be divided into a plurality of sub-parts, whereby different setup information may be displayed in each of the sub-parts. The operation unit may include a plurality of sub-operation units that may be used to change the setup information of the sub-parts of the second part of the display.

The setup information may be in the form of text or may be in the form of an image.

If the setup information is in the form of a text, the setup information may include set items and set values as defined by the photographing apparatus.

If a user command to change setup information is input through the operation unit, setup information changed according to the user command may be displayed on the second part of the display, and an image corresponding to the changed setup information may be displayed on the first part of the display.

If the setup information is in the form of an image, the setup information may be an image that may be signal-processed by the different set values of the photographing apparatus.

If a user selects one of the images that has been signal-processed by a set value through the operation unit, the image signal-processed may be then displayed on the first part of the display.

The first part of the display and the second part of the display may be physically divided from each other. For instance, the first part of the display may be located to the left of the second part of the display or to the right of the second part of the display. Other configurations are also contemplated.

The foregoing and/or other aspects and utilities of the present general inventive concept may also be achieved by providing a photographing apparatus including a display unit to display an image, a plurality of setup information selections, and an operation unit to receive a command from a user to change the setup information selection or selections, and wherein the display unit may be divided into a first part of the display to display the image and a second part of the display to display the setup information, and wherein the setup information selections may be image signal-processed by a set value or by set values.

The foregoing and/or other aspects and utilities of the present general inventive concept may also be achieved by providing a photographing apparatus including a display unit to display an image and a plurality of setup information selections, and an operation unit to receive a command from a user to change the setup information selection or selections, and wherein the display unit may be divided into a first part of the display to display the image and a second part of the display to display the setup information, and wherein the setup information selections may include set items or may include set values in the form of text or the like.

The foregoing and/or other aspects and utilities of the present general inventive concept may also be achieved by providing a method of controlling a photographing apparatus including displaying a photographed image, retrieving setup information to apply to the photographed image, and displaying the retrieved setup information while the photographed image is being displayed.

If a shutter button of a photographing apparatus is pressed halfway or to a midpoint, the displaying setup information may display the setup information.

The setup information may be in the form of either a text or an image.

If the setup information is in the form of a text, the setup information may include set items and set values.

The method may further include receiving a user command to change the setup information, and wherein the displaying setup information further includes displaying setup information changed according to the input command, and wherein displaying an image may include displaying an image corresponding to the changed setup information.

If the setup information is in the form of a plurality of images, the setup information may be an image signal-processed by different set values.

The method may further include receiving a user command to select one of images signal-processed by each set value and wherein the displaying an image may include displaying an image signal-processed by the selected set value.

The foregoing and/or other aspects and utilities of the present general inventive concept may also be achieved by providing a method of controlling a photographing apparatus including displaying a first photographed image, retrieving setup information to apply to the first photographed image, displaying the setup information while the first photographed image is displayed, changing the setup information corresponding to the first photographed image, and obtaining a second photographed image using the changed setup information.

The foregoing and/or other aspects and utilities of the present general inventive concept may also be achieved by providing a photographing apparatus including a display unit to display a first photographed image, an operation unit to receive a command of a user to change at least one setup information item, and wherein the display unit is divided into a first part to display the first photographed image and a second part to display the setup information item while the first photographed image is being displayed in the first part and further wherein the first display part displays a second photographed image taken in accordance with the changed setup information item.

The foregoing and/or other aspects and utilities of the present general inventive concept may also be achieved by providing a method of operating a camera including taking a first photograph, displaying the first photograph and one or more values and corresponding control parameters used to take the first photograph, changing a value of at least one of the control parameters, taking a second photograph using the changed value of the at least one control parameter.

The foregoing and/or other aspects and utilities of the present general inventive concept may also be achieved by providing a camera including a display including a first location to display a photograph and a second location to display one or more parameters used to control a taking of a photograph, the second location being divided into one or more parts, each part to display a control parameter, one or more first user inputs, each user input being uniquely associated with a corresponding part of the second location of the display and each user input operable to change a parameter displayed in the part of the second part uniquely associated with the corresponding user input, and a second user input to record a picture taken in accordance with the one or more parameters.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a front exterior perspective view of a digital camera according to an exemplary embodiment;

FIG. 2 is a rear exterior perspective view of a digital camera according to an exemplary embodiment;

FIG. 3 is a detailed view illustrating a liquid crystal display (LCD) and a display panel including a setup information button part according to an exemplary embodiment;

FIG. 4 is an interior block diagram of a digital camera according to an exemplary embodiment;

FIG. 5 is a flowchart illustrating a method of recording a video in which setup information is displayed and signal processing is processed by changing setup information;

FIGS. 6A to 6C are views illustrating a method of displaying and changing a photographed image and setup information according to an exemplary embodiment;

FIGS. 7A to 7C are views illustrating a method of displaying setup information in a group; and

FIGS. 8A and 8B are views illustrating a method of displaying the setup information as an image.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

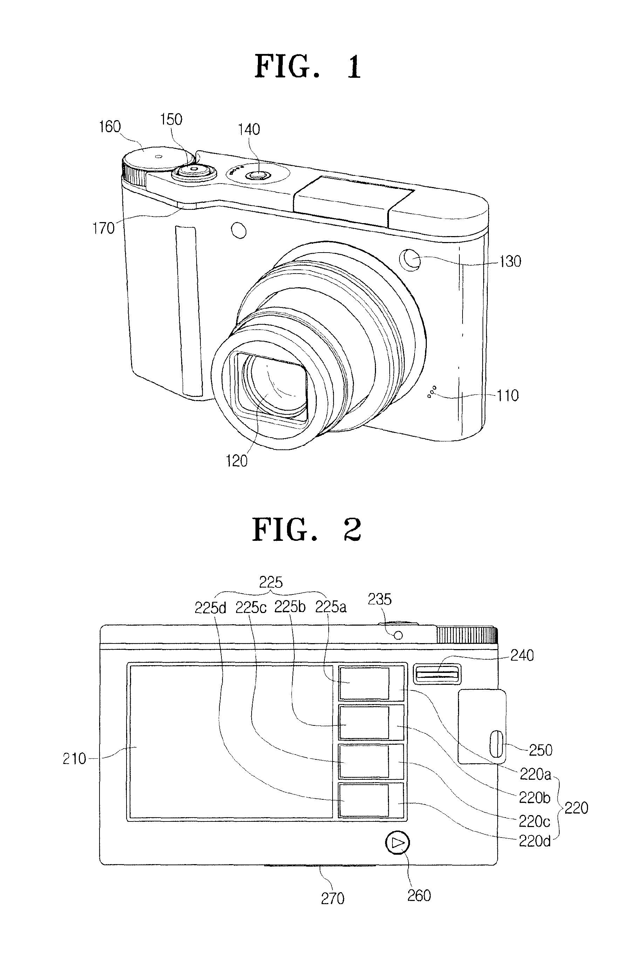

FIG. 1 is a front exterior perspective view of a digital camera according to an exemplary embodiment.

Referring to FIG. 1, the front of a digital camera may comprise a microphone 110, a lens 120, an auto focus (AF) assist-beam 130, a power button 140, a shutter button 150, a mode dial 160, and a self-timer lamp 170.

The microphone 110 is an audio signal receiving unit, and the lens 120 is a photographing element known to those of ordinary skill in the art.

The power button 140 is used to turn on and off the digital camera. The shutter button 150 is used to capture an image in a photographing mode. Shutter button 150 may also be used to record or take note of an audio. If the shutter button 150 is pressed while in a moving image photographing mode, a motion picture may be photographed for the period of time indicated on a liquid crystal display (LCD) panel (here including parts 210 and 225). If the shutter button 150 is pressed again during motion picture photographing, the moving image photographing may be stopped.

If the shutter button 150 is pressed halfway or to a midpoint while in a still image photographing mode, the digital camera may conduct an auto focus, and a user is accordingly able to check a flash charging condition. The setup information of an image may also be displayed on the LCD panel including parts 210 and 225. If the shutter button 150 is depressed completely, an image may be photographed, and the photographed image may be stored in a recording medium such as a memory card.

The mode dial 160 may be used by a user to set modes such as a still image photographing mode, a moving image photographing mode, a playback mode, a computer connection mode, or a system setup mode. The self-timer lamp 170 may be operated in a self-timer mode, from when the shutter button 150 is pressed until when the shutter is operated.

FIG. 2 is a rear exterior perspective view of a digital camera according to an embodiment of a present general inventive concept.

Referring now to FIG. 2, the back side of a digital camera may include a the liquid crystal display panel including parts 210 and 225, a camera condition lamp 235, a zoom button 240, a strap eyelet 250, a playback button 260, and a universal serial bus (USB) input terminal 270.

The LCD panel including parts 210 and 225 is divided into a first part 210 to display a photographed image and a second part 225 to display setup information. The second part 225 may be further divided into a plurality of setup information sub-parts 225a, 225b, 225c, 225d that may be used to display items of setup information. The first and second parts 210 and 225 may be physically located on one LCD as illustrated. Alternatively, multiple LCDs may also be used.

The setup information of this example includes control variables applied to the camera and/or photographed image, and set values of the control variables. That is, menus of a digital camera may include various control variables such as sensitivity, white balance, shutter speed, or flash. Each of these variables may be set to one of several detailed set values. A video may be photographed based on the set values. For example, if a video is photographed under the condition where sensitivity is '100', white balance may be 'clear day', shutter speed may be '1000', and flash may be 'on', above information such as '100', 'clear day', '1000', and 'on' is part of the setup information.

A setup information button part 220 may be an operation unit to receive a command of a user. The setup information button part 220 may be placed to overly the second part 225 of the LCD display panel. If the face of the setup information button part 220 is made of transparent material, the setup information may be seen through the display panel. Construction of the first part 210 of the LCD panel and the setup information button part 220 will be explained below.

Differing colors may be seen on the camera condition lamp 235 to indicate the on or off state of the digital camera, as well as the charging condition of the digital camera. The zoom button 240 is used to operate an optical zoom or a digital zoom as would be familiar to a digital camera user.

Playback button 260 may be used to toggle between a playback mode and a photographing mode. By pressing the playback button once during the digital camera operation, the digital camera is converted into the playback mode. If the playback button 260 is pressed once more, the digital camera may be converted into the photographing mode.

The USB input terminal 270 may be connected to an external apparatus such as a personal computer (PC) using a universal serial bus (USB) cable (not illustrated).

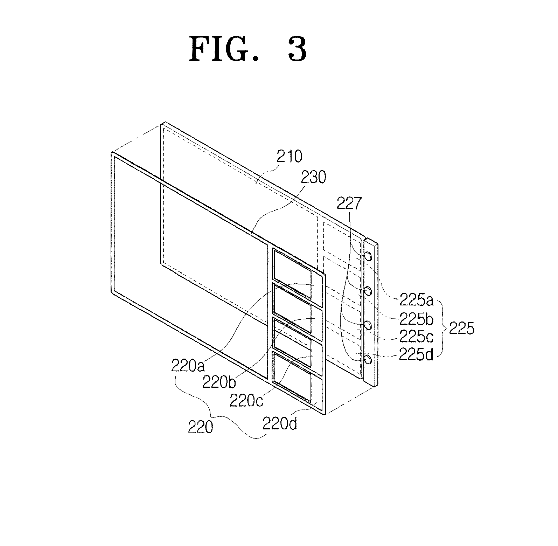

FIG. 3 is a detailed view illustrating parts 210 and 225 of the LCD panel as well as setup information button part 220. A housing 230 may be used to support the first part 210 of the LCD panel, as well as four switching units 227 at the right side of the first part 210 of the LCD panel. The housing 230 also divides the first and second parts 210 and 225 into the first part 210 and the second part 225 of the LCD panel. Four button frames 220a, 220b, 220c and 220d are disposed on the housing 230 and correspond to the second part 225. The four button frames 220a, 220b, 220c and 220d are separated apart from each other, and operated independently. If one of the four button frames 220a, 220b, 220c, 220d is pressed, the switching unit 227 corresponding to the pressed button is switched, and a user command is input. The housing 230 may be made of transparent material in order to show the setup information. The transparent material of housing 230 and the setup information button frames 220a-d located at the second part 225 are combined to operate as the setup information button part 220.

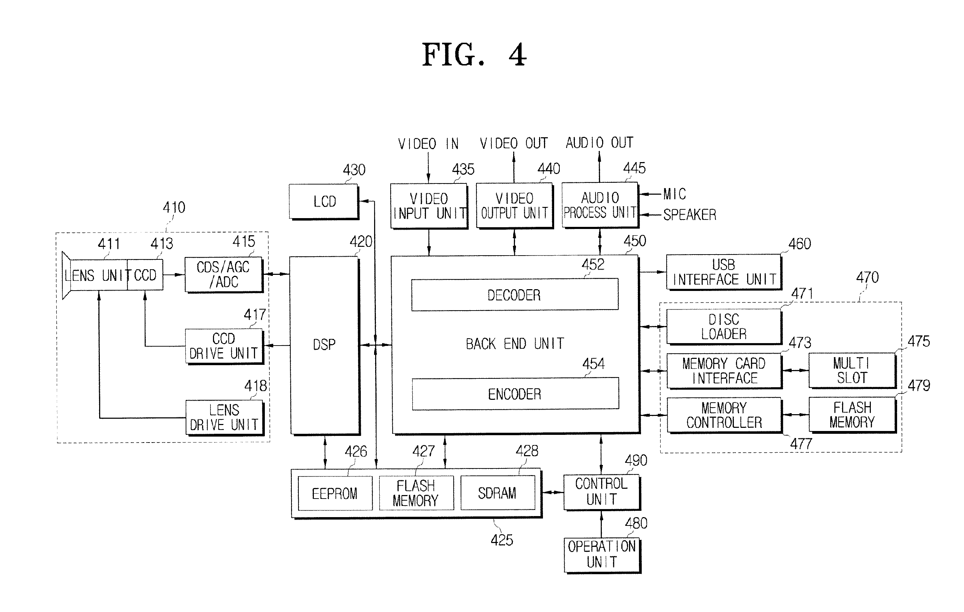

FIG. 4 is an interior block diagram of a digital camera according to an exemplary embodiment. Referring to FIG. 4, a digital camera of an exemplary embodiment may include a photographing unit 410, a digital signal processor (DSP) 420, a storage unit 425, a liquid crystal display (LCD) 430, a video input unit 435, a video output unit 440, an audio process unit 445, a back end unit 450, a universal serial bus (USB) interface unit 460, a record unit 470, an operation unit 480, and a control unit 490. Video input unit 435 may also be a still image input unit. However, for ease of understanding of the operation, reference numeral 435 will be referred to as a video input unit. As an image input unit 435, it is understood that the signal input and output may be in the form of a still image. Further, although FIG. 4 has arrows indicating relationships between the blocks, it understood by one of ordinary skill in the art that other relationships can exist and that further, other blocks may be present.

The photographing unit 410 may use a photoelectric process to transform an optical signal into an electrical signal, and then perform a signal processing of the electrical signal. The photographing unit 410 may include a lens unit 411, a charge coupled device (CCD) 413, a correlated double sampler/auto gain controller/analog to digital converter (CDS/AGC/ADC) 415, a charge coupled device (CCD) drive unit 417, and a lens drive unit 418.

The lens unit 411 may be used to converge an optical image of a subject to be photographed onto an optical surface of the CCD 413. This function will be explained below.

The lens drive unit 418 may drive the lens unit 411. That is, the lens drive unit 418 may drive the lens unit 411 using a zoom motor (not illustrated) such that a subject is zoomed in or out. The lens drive unit 418 also may drive the lens unit 411 using a focus motor such that a focus of a subject is adjusted. The lens drive unit 418 also may drive the lens unit 411 using an iris motor such that the degree of opening of an iris (not illustrated) may be adjusted.

The CCD 413 may be driven by the CCD drive unit 417, and may be a type of a photographing element which generates and outputs an electrical signal corresponding to the optical image converged on the optical surface by the lens unit 411.

The CDS/AGC/ADC 415 may process the electrical signal output from the CCD 413 in a manner of a correlated double sampling, an auto gain controller, or analog to digital (A/D) conversion.

The DSP 420 may perform a signal processing of a video and/or still image signal input from the photographing unit 410 or from the video input unit 435 that may have been processed through the back end unit 450. DSP 420 may then output the processed video signal to the back end unit 450 or to the LCD 430.

The DSP 420 may also process a video and/or still image signal according to information such as format conversion of the video and/or still image signal output from the photographing unit 410, a digital zoom to adjust an image scale, or auto white balance (AWB), and outputs the processed signal to the back end unit 450 or to the LCD 430. The DSP 420 may also control the lens drive unit 418 to perform an auto focus (AF), or auto exposure (AE).

The storage unit 425 stores program information and setup information to control a system of a photographing apparatus, and includes an electrically erasable and programmable read only memory (EEPROM) 426, a flash memory 427, and a synchronous dynamic random access memory (SDRAM) 428. The EEPROM 426 stores information such as setup information which is to be stored even when the power is turned off. The flash memory 427 stores a program to control the back end unit 450, and also stores multimedia content. The SDRAM 428 temporarily stores various backup data. A system downloads an upgrade program to control from an external apparatus which may be connected through a communication line, and stores the upgrade program in the flash memory 427. Data stored in the EEPROM 426 and the flash memory 427 remains even when the power is turned off, but data stored in the SDRAM 428 are lost with the power-off.

The LCD 430 may be a display element which displays a video and/or image signal output from the back end unit 450, and corresponds to the first and second parts 210 and 225 of the LCD panel of FIG. 2 in an exemplary embodiment. The LCD 430 displays setup information in addition to an image. The parts displaying the image and the setup information may be contiguous or spaced apart from each other. The setup information button part 220 is disposed on the LCD 430 which may display the setup information. A user may then press the setup information button part 220 to change the setup information displayed at the bottom of the setup information button 220 on the LCD 430.

The video input unit 435 receives a video signal from an external apparatus, and may transmit the received video signal to the DSP 420 or to the back end unit 450.

The audio process unit 445 converts an analog audio signal input through an audio input element such as a microphone into a digital audio signal. The converted audio signal may then be transmitted to the back end unit 450. The audio process unit 445 converts the digital audio signal output from the back end unit 450 into an analog audio signal, and outputs the converted audio signal to an external apparatus such as a speaker.

The back end unit 450 performs signal processing in a manner such as compressing, expanding, or reproducing a video, still image, and/or audio signal. The back end unit 450 may also include a decoder 452 and an encoder 454.

The decoder 452 restores a video and/or still image signal input from record unit 470 or from the video input unit 435, decompresses the video or still image signal to be appropriate for a display, and outputs the decompressed video or still image signal to the video output unit 450 or to the LCD 430. Accordingly, the back end unit 450 may process on screen display (OSD) of a restored image.

The encoder 454 compresses a video and/or still image signal input from the DSP 420 and an audio signal input from the audio process unit 445 into a predetermined format, and transmits the compressed file to the record unit 470.

The back end unit 450 transmits a file of Moving Picture Experts Group (MPEG) or Joint Photographic Experts Group (JPEG) format input, for example, from the DSP 420 to the record unit 470, as well as transmits the file of MPEG or JPEG format input from the record unit 470 to the DSP 420.

The USB interface unit 460 provides a USB communication interface between an external USB apparatus such as a PC or a printer and a digital camcorder. For example, the video output unit 440 may output a video and/or still image signal output from the back end unit 450 to an external apparatus such as, for example a television.

The record unit 470 records a compressed file output from the back end unit 450 to a record medium. The record unit 470 may include a disc loader 471, a memory card interface 473, a multi slot 475, a memory controller 477, and a flash memory 479.

The disc loader 471 records the compressed file input from the back end unit 450 to a disc. The disc loader 471 reads the compressed file of the disc, and outputs the read file to the back end unit 450. A compact disc (CD), a digital versatile disc (DVD), a blue ray disc (BD), or a high definition digital versatile disc (HD-DVD) may be used as a disc.

The memory card interface 473 records the compressed file input from the back end unit 450 onto various memory cards which are mounted to the multi slot 475.

The memory card interface 473 may also read the compressed files from the various memory cards mounted to the multi slot 475, and then output the read files back to the back end unit 450. A multimedia card (MMC) or a secure digital (SD) card may be used as a memory card.

The memory controller 477 records the compressed file input from the back end unit 450 in the flash memory 479 which may be a built-in memory. The memory controller 477 may also read the compressed file recorded in the flash memory 479, and then output the recorded file to the back end unit 450.

The disc, the memory card, and the flash memory 479 are a kind of recording medium. The present general inventive concept is applicable to other types of recording mediums, such as an optical record medium, a hard disk drive (HDD), or a detachably connected record medium. The record medium may include a temporary storage area and a record area, and can record in a manner that when an image is recorded on the record medium, the image stored in the temporary storage area is recorded in the record area.

The operation unit 480 receives a command of a user, and transmits the command to the control unit 490 which will be explained below. The operation unit 480 may be implemented as one body or may be implemented as several parts. The setup information button 220 may be disposed in the LCD 430 to display the setup information. Accordingly, a user inputs a command to change the setup information easily.

The control unit 490 controls overall operations of the digital camera. That is, the control unit 490 controls the DSP 420 to signal-process an image photographed at the photographing unit 410 according to setup information. The control unit 490 further retrieves setup information stored in the storage unit 425 and transmits the retrieved setup information to the LCD 430 such that the setup information, in addition to the photographed image, may be displayed on the LCD 430. The control unit 490 further controls the DSP 420 such that the photographed image is signal-processed according to setup information input from the operation unit 480, and the processed signal is transmitted to the LCD 430. The control unit 490 also controls various function blocks such that the photographed image may be recorded in the record unit 470.

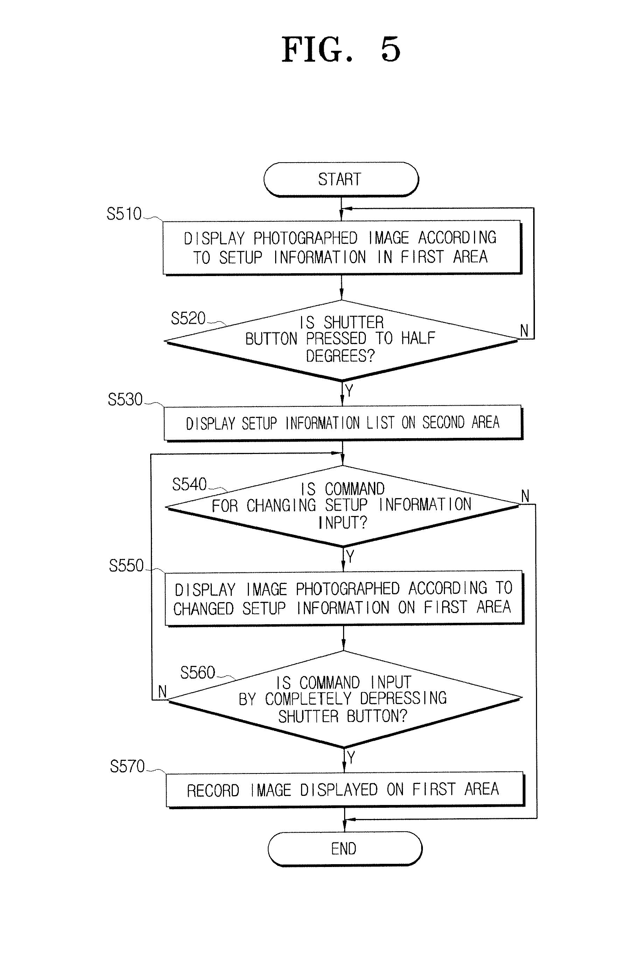

FIG. 5 is a flowchart illustrating a method of recording a video and/or still image in which setup information is displayed and signal processing may be performed by changed setup information according to an exemplary embodiment.

In operation S51 0, the LCD 430 is in an on-state, and the control unit 490 allows for an image to be displayed on the first part 210 on the LCD 430 according to setup information. That is, the CCD 413 photographs an optical image of a subject entering through the lens 120, and transmits the photographed image to the DSP 420. The DSP 420 performs a digital zoom or an AWB to change a format of a video or image signal output from the CCD 413 and to adjust a video scale, and transmits the changed image to the LCD 430.

In operation S520, the control unit 490 determines whether a shutter button 150 is partially depressed, for example, to a halfway point or to a midpoint. That is, if a user determines that an image on the first part 210 should be recorded, the user may press the shutter button 150 halfway.

After a positive determination in operation S520 that the shutter button 150 is pressed halfway, the control unit 490 in operation S530 displays a setup information list on the LCD panel second part 225. The setup information list displayed in operation S530 includes control variables and corresponding set values used to take the image that is displayed on the first part 210 of the LCD panel. The control unit 490 retrieves the setup information from the storage unit 425 in the order of influence on the image (hereinafter, referred to as 'image influence'), and then generates a new setup information list based upon the image influence using the retrieved setup information. Alternatively, one, several or all of the displayed items of the setup information list may be previously chosen by the user. For example, the user may be interested in controlling shutter speed, and would select shutter speed to be an element of the setup information list and the remaining items of the setup information list would be chosen based on the determined image influence. The new setup information list is then displayed on the second part 225 of the LCD panel. The setup information list may include various items such as brightness, resolution, shutter speed, or film speed (ISO). However, the second part 225 of the LCD panel may have limited area to display the setup information. In the embodiment discussed herein, four items of setup information may be displayed in the order of image influence on the second part 225 of the LCD panel. When the setup information is displayed, the control unit 490 may display set items and set values as a text.

In operation S540, the control unit 490 determines whether a command to change the setup information is input. If a user has pressed the shutter button 150 halfway and determines that an image displayed on the first part 210 of the LCD panel does not meet the recording criteria, for example, for the reason of poor lighting or such, the user can input a command to change one of setup information in the setup information list on the second part 225 of the LCD panel. The second part 225 of the LCD panel comprises four sub-parts in the embodiment taught herein, and each sub-part may include a setup information button such that a user may change setup information by pressing the button adjacent to or overlying the sub-part displaying the setup information to be changed. For example, if a user desires to change the setup information representing 'flash on', the user may input a command to change 'flash on' to 'flash off by pressing the setup information button in the button part 220 that corresponds to the setup information for 'flash on'. If no command is input to change the setup information, the method proceeds to operation S550. If a command is input to change the setup information, the method proceeds to operation S545 where the setup information is changed (a value of a control variable) according to the command. After changing the setup information in S545, the method proceeds to operation S550.

In operation S550, a photograph of an image is taken and displayed according to the current setup information. The taking of the photograph may be done automatically (e.g., as long as the user continues to depress the shutter button 150 halfway) or may require an additional user input. Preferably, but not necessarily, the photograph is taken automatically except when the setup information indicates the use of a flash, in which case the photograph is taken in response to an additional user input (e.g., again depressing the shutter button 150 halfway). If it is desired to use an additional user input to take the photograph according to the current setup information (e.g., when setup information includes 'flash on'), the camera may, previous to operation S550, take a photograph and display it in the first part 210 an image not in accordance with the current setup information to assist the photographer in determining the appropriate time to input the additional user input (and take the photograph according to the current setup information in operation S550), The control unit 490 signal-processes an image photographed according to the changed setup information, and controls function blocks such that the image is displayed at the first part 210 of the LCD panel. That is, if the control unit 490 receives a user command to change to 'flash off', the control unit 490 controls the DSP 420 such that the photographed image is signal-processed, and the control unit 490 controls the LCD 430 such that the signal-processed image is displayed at the first part 210 of the LCD panel.

In operation S560, the control unit 490 determines whether a command has been input by determining whether the shutter button 150 has been completely depressed. That is, if the image displayed at the first area 210 has been determined by the user to be appropriate to be recorded, a user fully depresses the shutter button 150. In the example above where the setup information included 'flash off', the recorded image would be one which did not use a flash since the control variable 'flash' was set to the value of 'off'.

In operation S560-Y, if the command of completely depressing the shutter button 150 is input, the control unit 490 in operation S570 now controls function blocks such that the photographed image may be signal-processed, and the signal-processed image may be now recorded in the record unit 470. That is, a signal process unit transmits the signal-processed image to the back end unit 450. The back end unit 450 compresses the transmitted image into a JPEG or other format, and then transmits the compressed image to the record unit 470. The record unit 470 records the image on an appropriate record medium. If the camera is being operated as a video camera, operation S570 may be followed by an operation to continue taking photographs in accordance with the current setup information until a user command is received to stop the moving image photographing (e.g., by pressing shutter button 150 a second time).

Hereinbelow, several preferred methods of displaying and changing photographed images and setup information will be illustrated.

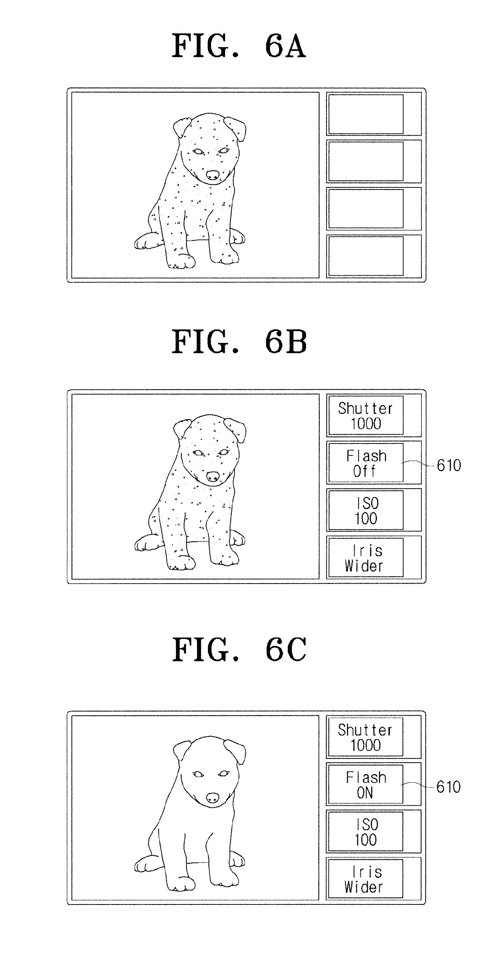

FIGS. 6A to 6C are views illustrating a preferred method of displaying and changing a photographed image and setup information according to an exemplary embodiment.

FIG. 6A is a view illustrating a state of displaying a photographed image on the LCD 430 while a shutter of the photographing apparatus is open. FIG. 6B is a view illustrating a state of displaying an image on the first part 210 and setup information on the second part 225 of the LCD 430 while the shutter button 150 is pressed halfway. The setup information displayed at the second part 225 of the LCD panel may include shutter speed, flash, ISO, and iris in the order of greater image influence, and set values may be 1000, off, 300, and wider.

If a user desires to input a command to change flash-on to photograph a brighter image, the user then presses once a second setup information button 610 corresponding to setup information button 220b in FIG.2. Turning again to FIG. 6C, the state of the flash is changed to 'on', and an image according to the changed set information is displayed at the first part 210 of the LCD panel. A user may continue to change other set values in the same manner, but if the user desires to record the changed image, the user completely depresses the shutter button 150, and the image is processed accordingly.

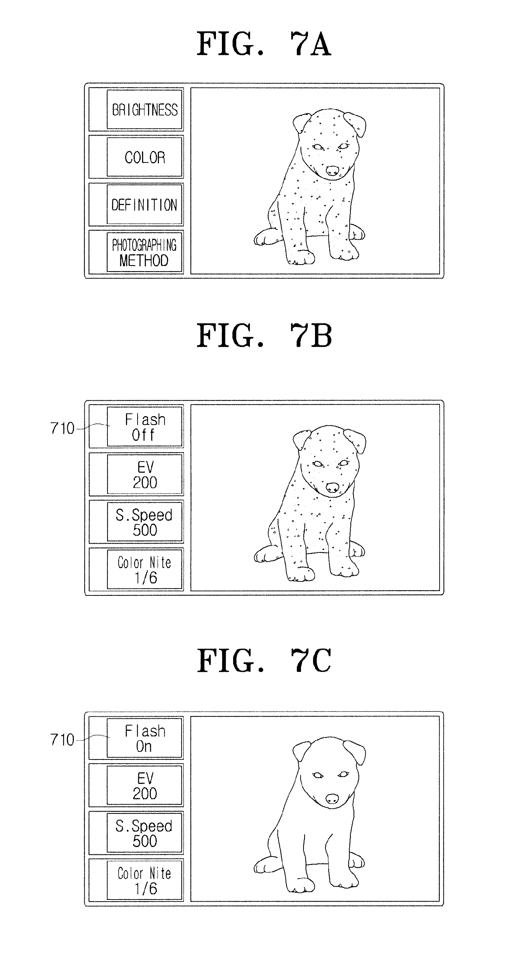

FIGS. 7A to 7C are views illustrating another method of displaying setup information in groups. Unlike FIGS. 6A to 6C, the second part 225 of the LCD panel of FIGS. 7A to 7C is disposed at the left side of the first part 210 of the LCD panel. If the shutter button 150 is pressed halfway, a setup information list is displayed that may include brightness, color, image quality, and photographing method. This information may be displayed at the second part 225 of the LCD panel. If a user then selects one of the items in this setup information list, further setup information regarding the selected menu item may be displayed at the second part 225 of the LCD panel. For example, if a user selects menu item 'brightness' from the initial setup information list, then further setup information regarding the brightness may be displayed as illustrated in FIG. 7B. The setup information is displayed with menu items and set values from which the user may choose. As illustrated in FIG. 7B, a user may press a first setup information button 710 to change set value of the menu item 'flash off'. Referring to FIG. 7C, the set information value has been changed to 'flash on', and an image according to the changed set value is now displayed at the first part 210 of the LCD panel.

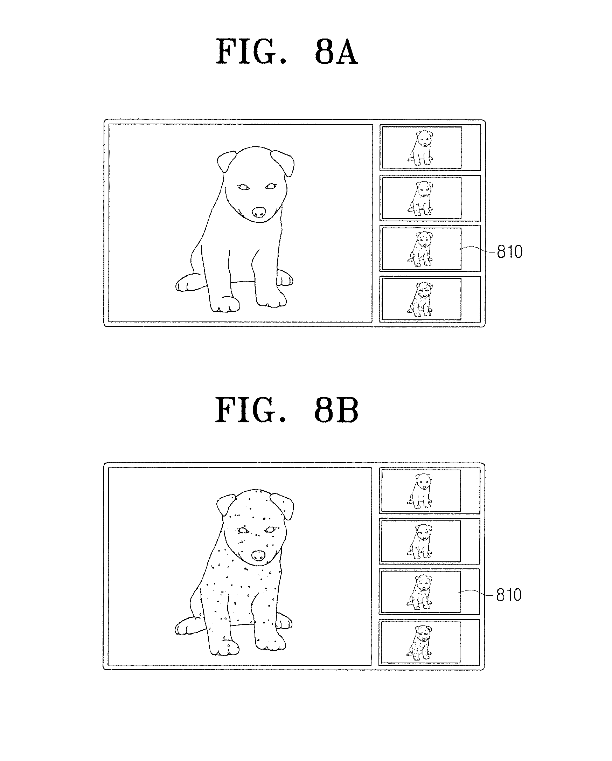

FIGS. 8A and 8B are views illustrating a method of displaying the setup information as an image, instead of text, as was illustrated in FIGS. 6A to 6C. Referring back to FIGS. 8A and 8B, setup information may be displayed as an image. Referring to FIG. 8A, for example, if a set item is brightness, an image according to set value of the brightness may be displayed on the second part 225 of the LCD panel. A user may select an image that corresponds to set value. For example, FIG. 8B is a view illustrating an image at the first part 210 of the LCD panel after the user has selected the corresponding image using the third setup information button 810 at the second part 225 of the LCD panel.

In the exemplary embodiments described herein, a housing divides the LCD panel into a first part and into a second part. However, the above examples should not be construed in any way as limiting. For example, the first and second parts 210 and 225 of the LCD panel may be implemented as independent LCDs. A photographed image may be displayed at one LCD, and the setup information may be displayed at a different LCD than the LCD having the photographed image.

In exemplary embodiments discussed above, the switching unit 227 is disposed at the right or left side of an LCD. However, the above examples should not be construed as limiting. The switching unit 227 alternatively may be also disposed at an upper or lower portion of the LCD. If the switching unit 227 is at the lower portion of the LCD, then modifications to the design may be needed to connect the shutter button 150 and switching unit 227.

An exemplary embodiment describes that setup information is displayed when the shutter button 150 is pressed halfway. However, the above examples should not be construed as limiting. Setup information may be also displayed if a user presses the shutter button 150 during motion picture photographing. Additionally, the present general inventive concept is applicable to other photographing apparatuses as well as a digital camera.

As described above, the present general inventive concept may easily change set values, and confirm quickly an image according to the changed set values. As a result, user convenience is provided.

Although a few exemplary embodiments of the present general inventive concept have been illustrated and described, it will be appreciated by those skilled in the art that changes may be made in these embodiments without departing from the principles and spirit of the general inventive concept, the scope of which is defined in the appended claims and their equivalents. As used in this disclosure, the term "preferably" is non-exclusive and means "preferably, but not limited to." Terms in the claims should be given their broadest interpretation consistent with the general inventive concept as set forth in this description. For example, the terms "coupled" and "connect" (and derivations thereof) are used to connote both direct and indirect connections/couplings. As another example, "having" and "including", derivatives thereof and similar transition terms or phrases are used synonymously with "comprising" (i.e., all are considered "open ended" terms) - only the phrases "consisting of" and "consisting essentially of" should be considered as "close ended". Claims are not intended to be interpreted under 112 sixth paragraph unless the phrase "means for" and an associated function appear in a claim and the claim fails to recite sufficient structure to perform such function.

## Claims

1. A photographing apparatus comprising:
a display unit to display a photographed image and to display setup information; and
an operation unit to receive a command to change the setup information, and
wherein the display unit is divided into a first part to display the photographed image and a second part to display the setup information, and the operation unit is disposed within the second part.

2. The apparatus of claim 1, wherein the operation unit comprises:
a button that can be pressed by a user; and
a switching unit that is enabled by the pressing of the button, the switching unit enabled to receive the command; and
wherein the button is disposed within the second part.

3. The apparatus of claim 1, wherein if a shutter button of the photographing apparatus is pressed halfway, the setup information is displayed within the second part.

4. The apparatus of claim 1, wherein the second part is divided into a plurality of sub-parts, and wherein setup information is displayed within each sub-part, and the operation unit comprises a plurality of sub-operation units to change the setup information of the sub-parts of the second part.

5. The apparatus of claim 4, wherein the setup information is in the form of either a text or an image.

6. The apparatus of claim 5, wherein the setup information comprises control variables and set values associated with a corresponding control variable.

7. The apparatus of claim 6, wherein if a user command to change setup information is input through the operation unit, setup information is changed according to the user command and is displayed on the second part, and a new photographed image corresponding to the changed setup information is displayed on the first part.

8. The apparatus of claim 6, wherein the setup information is in the form of an image which has been signal-processed in accordance with at least one of the set values.

9. The apparatus of claim 8, wherein the second part is operable to display multiple images each signal-processed by a different set value of a control variable, and the first part is operable to display an image signal-processed by a set value corresponding to one of the multiple images displayed in the second part selected by a user command through the operation unit.

10. The apparatus of claim 1, wherein the first part and the second part are separate display units.

11. A photographing apparatus comprising:
a display unit to display an image and a plurality of setup information items; and
an operation unit to receive a command to change one of the setup information items; andwherein the display unit is divided into a first part to display the image and a second part to display the setup information items, and each of the setup information items is an image signal-processed by a set value.

12. A photographing apparatus comprising:
a display unit to display an image and a plurality of setup information items; and
an operation unit to receive a command to change one of the setup information items; andwherein the display unit is divided into a first part to display the image and a second part to display the setup information, and each of the setup information items comprise a control variable and a corresponding set value.

13. A method of controlling a photographing apparatus comprising:
displaying a photographed image;
retrieving setup information corresponding to the photographed image; and
displaying the retrieved setup information while the photographed image is displayed.

14. The method of claim 13, wherein if a shutter button of a photographing apparatus is pressed halfway, the setup information is displayed.

15. The method of claim 13, wherein the setup information is in the form of either text or an image.

16. The method of claim 15, wherein the setup information is in the form of text and comprises control variables and set values.

17. The method of claim 16 further comprising:
receiving a user command to change the setup information, and
wherein displaying setup information comprises displaying setup information changed according to the received user command, and
wherein displaying an image comprises displaying an image corresponding to the changed setup information.

18. The method of claim 15, wherein the displaying the retrieved setup information includes displaying a plurality of images each corresponding to an image signal-processed by a different set values.

19. The method of claim 18, further comprising:
receiving a user command to select one of the plurality of images displayed; and
wherein the operation of displaying a photographed image comprises displaying an image signal-processed by the set value corresponding to the selected image.

20. A photographing apparatus comprising:
a display including a first location to display a photograph and a second location to display one or more parameters used to control a taking of a photograph, the second location being divided into one or more parts, each part to display a control parameter;
one or more first user inputs, each first user input being uniquely associated with a corresponding part of the second location of the display and each first user input operable to change a parameter displayed in the corresponding part of the second location uniquely associated with the corresponding first user input; and
a second user input to record a picture taken in accordance with the one or more parameters.

21. The photographing apparatus of claim 20, further comprising:
a controller which determines which control parameters to display in the one or more parts of the second location in response to an analysis of a photograph.

22. The photographing apparatus of claim 20, further comprising:
a user interface which allows a user to select which one or more control parameters are to be displayed in the one or more parts of the second location.
